# FASCICULE DE BREVET EUROPEEN

(11) **EP 0 517 633 B1**
(45) Date de publication et mention de la délivrance du brevet: **15.05.1996**
(21) Numéro de dépôt: 92440067.4
(22) Date de dépôt: 03.06.1992
(51) Int. Cl.: A01D 43/10, A01D 69/00

(54) **Faucheuse perfectionnée**
Verbesserte Mähmaschine
Improved mower

(30) Priorité: 05.06.1991 FR 9106905
(43) Date de publication de la demande: 09.12.1992
(73) Titulaire: KUHN S.A., F-67700 Saverne (FR)
(72) Inventeur: Neuerburg, Horst, F-67700 Saverne (FR); Wolff, Michel, F-67670 Waltenheim sur Zorn (FR)

(56) Documents cités:
- EP-A- 0 155 063
- EP-A- 0 337 909
- DE-A- 2 421 101
- DE-A- 3 104 780
- GB-A- 2 105 964

## Description

La présente invention concerne une faucheuse comportant :
- un mécanisme de récolte s'étendant, au travail, transversalement à la direction de travail, lequel mécanisme de récolte comprend d'une part une barre de coupe à disques tournant chacun, lors du travail,autour d'un axe géométrique respectif dirigé vers le haut et munis d'outils de coupe, quelques uns au moins desdits disques étant entraînés en rotation par des moyens de transmission situés sous lesdits disques, et d'autre part un rotor de traitement du produit coupé par les outils de coupe ;
- une structure d'attelage destinée à être liée à un véhicule moteur ;
- une poutre-support articulée d'une part à la structure d'attelage au moyen d'une première liaison pivot d'axe géométrique dirigé vers l'avant et d'autre part au mécanisme de récolte au moyen d'une deuxième liaison pivot d'axe géométrique également dirigé vers l'avant ;
et
- des organes d'entraînement destinés à entraîner le rotor de traitement par son extrémité longitudinale intérieure située du côté de la structure d'attelage.

Une telle faucheuse est connue par le document EP-A-0 155 063.

La faucheuse qui y est décrite comporte un mécanisme de récolte s'étendant, au travail, transversalement à la direction de travail, une structure d'attelage destinée à être liée à un véhicule tracteur, et une poutre porteuse liant, de manière articulée, le mécanisme de récolte à la structure d'attelage.

Le mécanisme de récolte de cette faucheuse connue comprend tout d'abord une barre de coupe qui comporte une pluralité de disques tournant chacun, lors du travail, autour d'un axe géométrique vertical respectif et munis, à leur périphérie, de lames destinées à couper le produit à récolter. L'entraînement en rotation des disques est réalisé à partir de la prise de force du tracteur auquel est attelée la faucheuse, laquelle prise de force communique le mouvement aux organes d'entraînement de la barre de coupe au moyen d'un premier arbre télescopique à cardans. Ces organes d'entraînement de la barre de coupe comportent tout d'abord un carter réalisé sous forme de boîte de vitesses et fixé sur la poutre porteuse. L'arbre d'entrée de ce carter est accouplé au premier arbre télescopique à cardans et est en liaison d'entraînement avec l'arbre de sortie dudit carter. Ces organes d'entraînement de la barre de coupe comportent ensuite un dispositif à poulies et courroies. Une première poulie est en liaison d'entraînement avec l'arbre de sortie du carter et transmet le mouvement de rotation à une deuxième poulie par l'intermédiaire de courroies. Cette deuxième poulie est fixée sur l'arbre d'entrée du carter de renvoi de la barre de coupe, lequel carter de renvoi transmet ensuite le mouvement de rotation reçu aux moyens de transmission logés dans le carter porteur s'étendant sous les disques, et destinés à communiquer le mouvement de rotations auxdits disques. La barre de coupe comporte également un bras porteur disposé directement au-dessus du carter porteur. Ce bras porteur est fixé, à son extrémité proche de la poutre porteuse, au carter de renvoi de la barre de coupe.

Le mécanisme de récolte de cette faucheuse connue comprend ensuite un rotor de traitement du produit coupé par les lames des disques de la barre de coupe. L'entraînement en rotation du rotor de traitement est effectué à partir des organes d'entraînement de la barre de coupe et plus précisément à partir de l'arbre d'entrée du carter de ceux-ci. A cet effet, ledit arbre d'entrée est en liaison d'entraînement avec une troisième poulie qui transmet le mouvement de rotation à une quatrième poulie par l'intermédiaire de courroies. Cette quatrième poulie est fixée sur un arbre associé à une boîte de vitesses dont l'arbre de sortie est accouplé à l'arbre du rotor de traitement au moyen d'un deuxième arbre télescopique à cardans. Le dispositif à poulies et courroies, l'arbre associé à ladite boîte de vitesses et le deuxième arbre télescopique à cardans constituent les organes d'entraînement du rotor de traitement.

Les organes d'entraînement du rotor de traitement reçoivent donc le mouvement de rotation à partir des organes d'entraînement de la barre de coupe. Du reste, les organes d'entraînement de la barre de coupe comportent une boîte de vitesses permettant de sélectionner la vitesse de rotation des disques en fonction des conditions de travail. Il en est de même des organes d'entraînement du rotor de traitement, qui comportent également une boîte de vitesses permettant de sélectionner la vitesse de rotation du rotor de traitement notamment en fonction de la nature et du volume du produit à traiter.

Du reste, un capot, surplombant le rotor de traitement, collabore avec ce dernier en vue du traitement du produit coupé par les lames des disques de la barre de coupe. Ce capot est lié de manière articulée au bras porteur. Sa position relative par rapport au rotor de traitement peut ainsi être ajustée pour sélectionner l'intensité du traitement souhaitée.

La structure d'attelage comporte un cadre d'attelage à trois points d'attelage destinés à être accouplés aux trois points d'attelage du dispositif de relevage du véhicule tracteur.

La poutre porteuse, enfin, lie de manière articulée, le mécanisme de récolte à la structure d'attelage. A cet effet, la poutre porteuse est liée d'une part à la structure d'attelage au moyen d'une première articulation d'axe géométrique parallèle à la direction d'avance durant le travail, et d'autre part au mécanisme de récolte au moyen d'une deuxième articulation dont l'axe géométrique est confondu avec l'axe de rotation de l'arbre d'entrée du carter de renvoi de la barre de coupe et est parallèle à l'axe géométrique de la première articulation.

Cette faucheuse connue présente l'avantage bien connu de l'entraînement de la barre de coupe au moyen d'organes d'entraînement comportant un dispositif à poulies et courroies qui autorise une transmission du mouvement à la barre de coupe en toute sécurité.

Les organes d'entraînement de cette faucheuse connue et notamment ceux qui sont destinés à animer le rotor de traitement, sont cependant relativement volumineux et ne laissent que peu de place disponible pour loger les éléments de châssis autres que le vérin de levage, à savoir : ressort(s) d'allégement, limiteur, verrou, ... nécessaires pour la bonne utilisation de la faucheuse.

Dans le document DE-A-24 21 101 est décrite une faucheuse comportant également un mécanisme de récolte s'étendant, au travail, transversalement à la direction de travail, une structure d'attelage (non représentée) destinée à être liée au dispositif de relevage à trois points d'un véhicule tracteur, et une poutre porteuse liée de manière articulée au mécanisme de récolte.

Le mécanisme de récolte de cette faucheuse connue comprend tout d'abord un châssis porteur qui porte une pluralité de tambours tournant chacun, lors du travail, autour d'un axe géométrique vertical respectif et munis, à leur extrémité inférieure respective, de lames destinées à couper le produit à récolter. L'entraînement en rotation des tambours est réalisé à partir du tracteur auquel est attelée la faucheuse. Bien que le document DE-A-24 21 101 ne le décrive pas de manière explicite, on peut admettre que la prise de force du tracteur entraîne, par l'intermédiaire d'un arbre télescopique à cardans, l'arbre d'entrée d'un carter de renvoi lequel transmet le mouvement à l'arbre d'entraînement. Cet arbre d'entraînement qui s'étend à l'intérieur du châssis porteur et qui est ainsi situé au-dessus des tambours, est destiné à entraîner chaque tambour en rotation autour de son axe vertical respectif.

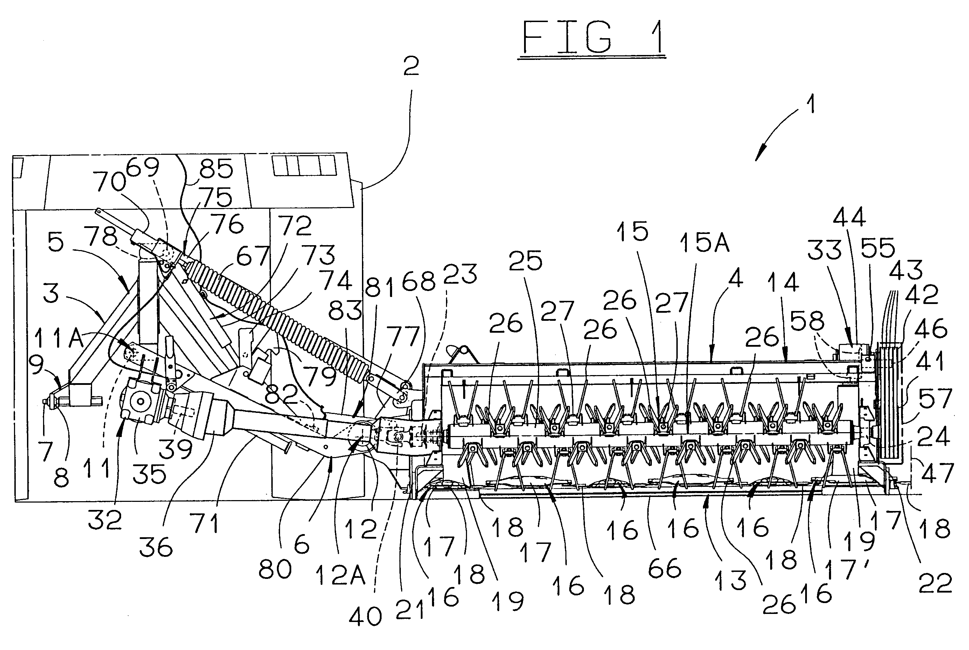

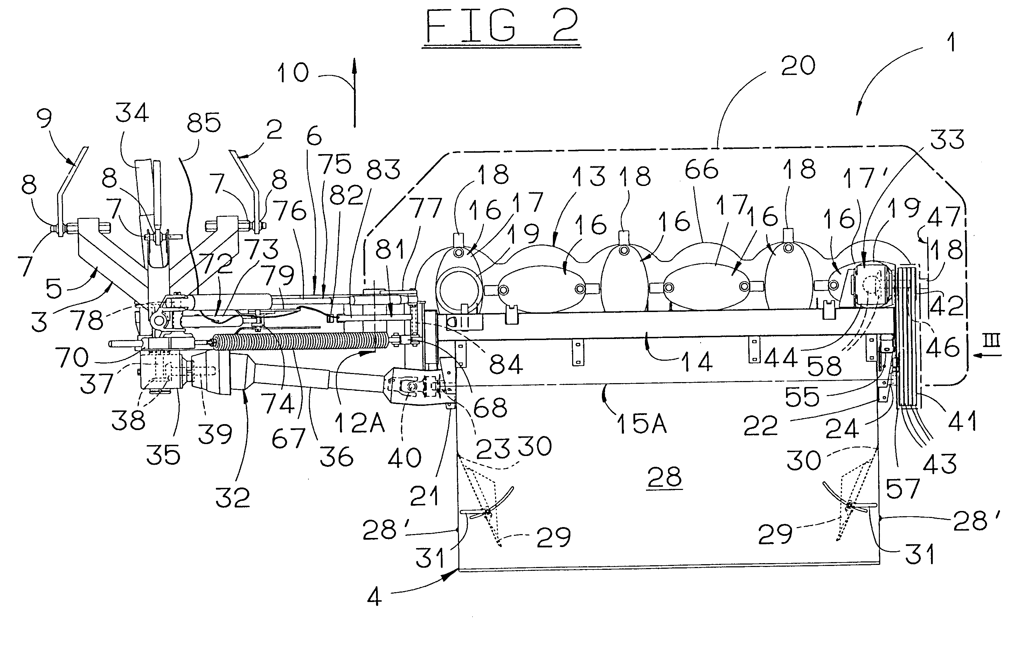

Le mécanisme de récolte de cette faucheuse connue comprend ensuite un dispositif de traitement du produit coupé par les tambours. Ce dispositif de traitement comporte des rouleaux de pressage (figure 1) ou un rotor à fléaux (figure 2). Ces rouleaux de pressage ou le rotor à fléaux sont également entraînés en rotation à partir de l'arbre d'entraînement. A cet effet, cet arbre d'entraînement porte à son extrémité éloignée de la poutre porteuse, qui sort du châssis porteur, une première poulie qui est en liaison d'entraînement, par l'intermédiaire de courroies, avec une deuxième poulie portée par l'arbre de l'un des rouleaux de pressage ou du rotor à fléaux.

Dans une autre solution, il est également prévu que les courroies et les poulies soient remplacées par une chaîne et des pignons de chaîne.

Le but de la présente invention est de créer une faucheuse qui ne présente pas l'inconvénient de la faucheuse connue par le document EP-A-0 155 063, tout en conservant l'avantage de la transmission du mouvement en toute sécurité à la barre de coupe.

Pour atteindre cet objectif, la faucheuse selon la présente invention est caractérisée en ce que le mécanisme de récolte est muni d'organes de transmission s'étendant à l'extrémité longitudinale extérieure du rotor de traitement éloignée de la structure d'attelage et destinés à transmettre le mouvement du rotor de traitement aux disques de la barre de coupe, lesdits organes de transmission comprenant deux poulies sur lesquelles s'enroule au moins une courroie.

Etant donné que les organes de transmission destinés à animer les disques de la barre de coupe s'étendent à l'extrémité longitudinale extérieure du rotor de traitement, un espace important a été libéré dans le voisinage de la poutre-support, dans lequel espace peuvent être logés le dispositif de relevage et le dispositif d'allégement du mécanisme de récolte, ainsi que le dispositif de limitation du pivotement de la poutre-support et le dispositif verrouillant le mécanisme de récolte dans la position relevée de transport.

Cet avantage a pu être obtenu tout en conservant l'avantage issu de la transmission du mouvement à la barre de coupe au moyen de poulies et de courroies.

Selon une caractéristique supplémentaire de l'invention, il peut également être prévu que les organes de transmission ne s'étendent pas au-delà d'un plan vertical dirigé suivant la direction de travail et contenant l'extrémité extérieure de la zone de coupe. De ce fait, les organes de transmission ne risquent pas d'accrocher ou de coucher le produit non encore coupé.

Il peut aussi être prévu que les organes de transmission transmettent le mouvement du rotor, par le dessus, à l'un des disques situés à l'extrémité longitudinale extérieure de la barre de coupe, de préférence le disque extérieur, ce mouvement étant ensuite communiqué, de manière connue, aux autres disques par l'intermédiaire desdits moyens de transmission s'étendant à l'intérieur du carter de forme longitudinale de la barre de coupe.

Avantageusement, chaque disque s'étendant à une extrémité longitudinale respective de la barre de coupe peut être surmonté d'un tambour correspondant, fermé ou ajouré, destiné à calibrer le flux de produit coupé par les outils de coupe.

Il peut également être prévu que le mécanisme de récolte comprenne en sus une structure porteuse surmontant la barre de coupe, et que les organes de transmission comportent un carter de renvoi fixé à ladite structure porteuse.

Cette structure porteuse peut être liée à la barre de coupe au moyen de deux parois latérales s'étendant chacune vers le bas de sorte que son extrémité inférieure soit située derrière un disque situé à l'extrémité longitudinale correspondante de la barre de coupe.

Par ailleurs, l'une desdites poulies peut être directement fixée sur l'extrémité longitudinale extérieure du rotor de traitement, tandis que l'autre poulie peut être directement fixée sur l'arbre d'entrée du carter de renvoi, un arbre télescopique à joints universels liant en rotation l'arbre de sortie dudit carter de renvoi avec l'un des disques de la barre de coupe, de préférence le disque extérieur.

Un dispositif peut être prévu pour régler la tension de la (des) courroie(s).

En particulier, ce dispositif de réglage peut comporter :
- un levier articulé dans sa partie médiane à la structure porteuse au moyen d'une liaison pivot d'axe géométrique au moins sensiblement parallèle à l'axe de rotation du rotor de traitement,
- une poulie guidée en rotation à l'une des deux extrémités longitudinales du levier, et
- un ressort agissant, de manière réglable, sur l'autre extrémité longitudinale du levier de sorte à tendre la (les) courroie(s) via ladite poulie.

Selon une autre caractéristique de l'invention, il peut être prévu que les organes d'entraînement servant à entraîner le rotor de traitement, comportent un carter de renvoi.

Ce carter de renvoi peut avantageusement être fixé à la poutre-support dans le voisinage de la première liaison pivot. Cela facilitera généralement l'entraînement de l'arbre d'entrée du carter de renvoi depuis le véhicule moteur auquel est liée la structure d'attelage de la faucheuse.

En sus, les organes d'entraînement peuvent comporter un arbre télescopique à joints universels s'étendant transversalement à la direction de travail et transmettant le mouvement de rotation de l'arbre de sortie dudit carter de renvoi au rotor de traitement.

Dans une réalisation particulièrement intéressante, le centre du joint universel dudit arbre télescopique à joints universels se trouvant en regard du rotor de traitement, peut être situé dans le voisinage de l'axe géométrique de la deuxième liaison pivot. Grâce à un tel agencement, il n'est pas nécessaire de retirer ledit arbre télescopique à joints universels si l'on désire amener le mécanisme de récolte dans une position relevée de transport par pivotement autour de l'axe géométrique de la deuxième liaison pivot.

Ce pivotement peut être avantageusement réalisé au moyen d'un organe de manoeuvre.

Cet organe de manoeuvre peut être un vérin lié, à l'une de ses extrémités longitudinales, à la paroi latérale intérieure du mécanisme de récolte au moyen d'un levier pivotant et, à l'autre de ses extrémités longitudinales, à la structure d'attelage à l'aide d'une articulation présentant un axe géométrique au moins sensiblement parallèle à l'axe géométrique de la première liaison pivot.

En sus, il peut être prévu que, vue suivant la direction d'avance au travail, la poutre-support présente, dans le voisinage de la deuxième liaison pivot, un coude situé plus bas que l'axe géométrique de ladite deuxième liaison pivot. Lorsque le mécanisme de récolte est en position relevée de transport, le coude présente un double avantage. Il permet d'une part un gain de place entre la poutre-support et la paroi latérale intérieure et il permet d'autre part à la poutre-support de mieux supporter l'action du poids du mécanisme de récolte dont le centre des masses s'étend au moins sensiblement à la verticale dudit coude.

Selon une autre caractéristique avantageuse de l'invention, il peut être prévu que le mécanisme de récolte soit délesté au moyen d'un organe de délestage.

Cet organe de délestage peut être lié, à l'une de ses extrémités longitudinales, à la paroi latérale intérieure du mécanisme de récolte au moyen d'une bielle et, à l'autre de ses extrémités longitudinales, à la structure d'attelage à l'aide d'une articulation présentant un axe géométrique au moins sensiblement parallèle à l'axe géométrique de la première liaison pivot.

D'autres caractéristiques et avantages de l'invention apparaissent dans la description suivante d'un exemple non limitatif de réalisation faite en référence au dessin annexé sur lequel :
- la figure 1 représente, en position de travail, une faucheuse selon l'invention, vue de l'arrière dans le sens d'avance au travail et liée à un véhicule moteur ;
- la figure 2 représente une vue de dessus de la faucheuse de la figure 1 en position de travail ; et
- la figure 3 représente, à une échelle agrandie, une vue du mécanisme de récolte de la faucheuse suivant la flèche III définie sur la figure 2.

Sur les figures 1 à 3 apparait une faucheuse (1) selon l'invention. Celle-ci est attelée à un tracteur agricole (2).

Cette faucheuse (1) se compose principalement d'un châssis (3) et d'un mécanisme de récolte (4). Le châssis (3) comporte plus particulièrement une structure d'attelage (5) et une poutre-support (6).

La structure d'attelage (5) est munie, à sa partie frontale, de trois points d'attelage (7) destinés à être liés aux trois points d'attelage (8) du dispositif de relevage (9) du tracteur agricole (2). La poutre-support (6), quant à elle, s'étend, en vue de dessus, lors du travail, transversalement à la direction de travail (10) et au moins sensiblement au même niveau que la structure d'attelage (5). A l'une de ses extrémités longitudinales, la poutre-support (6) est articulée à la structure d'attelage (5) au moyen d'une première liaison pivot (11) d'axe géométrique (11A) dirigé vers l'avant et s'étendant, en vue suivant la direction d'avarice (10) au travail, au moins sensiblement dans le voisinage du centre du triangle défini par les trois points d'attelage (7) de la structure d'attelage (5). A son autre extrémité longitudinale, la poutre-support (6) du châssis (3) est articulée à une extrémité longitudinale du mécanisme de récolte (4) au moyen d'une deuxième liaison pivot (12) d'axe géométrique (12A) dirigé vers l'avant. Grâce à un tel châssis (3), le mécanisme de récolte (4) peut s'étendre, lors du travail, à côté de la voie du tracteur (2) et s'adapter aisément au relief du sol.

Comme représenté sur les figures, le mécanisme de récolte (4) comporte principalement une barre de coupe (13), une structure porteuse (14) et un rotor de traitement (15). La barre de coupe (13) est équipée d'une pluralité d'organes de coupe (16) comportant des disques (17) munis à leur périphérie d'outils de coupe (18). Au travail, ces disques (17) tournent autour d'axes géométriques dirigés vers le haut. De plus, d'une manière connue de l'homme de l'art, les disques (17) qui s'étendent chacun à une extrémité longitudinale de la barre de coupe (13), sont chacun surmontés d'un tambour (19) fermé tournant autour du même axe géométrique que le disque (17) qu'il surmonte. Ces deux tambours (19) calibrent le flux de produit coupé par les organes de coupe (16).

Au-dessus de la barre de coupe (13) s'étend, par ailleurs, la structure porteuse (14) qui est notamment destinée à supporter les organes de protection (20) (représentés en traits mixtes sur la figure 2). Cette structure porteuse (14) est liée à la barre de coupe (13) au moyen de deux parois latérales (21, 22) s'étendant vers le bas et dont chaque extrémité inférieure est agencée derrière un disque (17) surmonté d'un tambour (19). Un tel agencement autorise une largeur de travail égale à la longueur de la barre de coupe (13) sans risquer de perturber l'écoulement du produit coupé.

Le produit coupé est ensuite traité par le rotor de traitement (15) dont l'axe de rotation (15A) s'étend derrière la barre de coupe (13) et, en vue arrière, au moins sensiblement au niveau du sommet des tambours (19) (figure 1). Par ailleurs, le rotor de traitement (15) s'étend au moins sensiblement parallèlement à l'axe longitudinal de la barre de coupe (13) et est guidé en rotation, dans le voisinage de ses extrémités longitudinales (23, 24), dans les parois latérales (21, 22) de la structure porteuse (14).

Dans cet exemple de réalisation, le rotor de traitement (15) est un rotor du type "aérateur" comportant un support central (25) auquel est fixée une pluralité d'organes de traitement (26) (figure 1). Chaque organe de traitement (26) présente une forme en "V" dont l'extrémité inférieure est liée au support central (25) au moyen d'une vis (27) correspondante. Pour traiter la totalité du produit coupé, ces organes de traitement (26) sont répartis régulièrement sur toute la largeur de travail du support central (25) et leurs extrémités libres s'étendent, en vue arrière lors du travail, jusque dans le voisinage du sol. De plus, ces organes de traitement (26) sont décalés angulairement l'un par rapport à l'autre autour de l'axe de rotation (15A) du rotor de traitement (15), de manière à générer une hélice assurant un meilleur traitement du produit coupé.

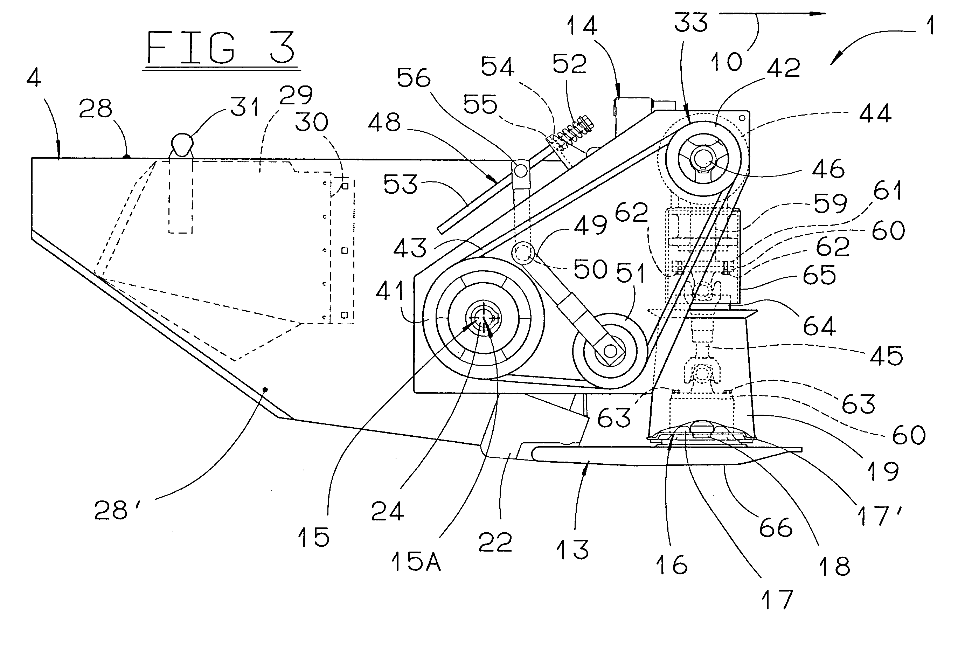

Sur les figures 2 et 3, on peut voir que la structure porteuse (14) supporte un capot (28) et deux tôles latérales (28') servant à canaliser le flux de produit traité. A chaque tôle latérale (28') est articulée une tôle à andains (29) au moyen d'une charnière (30) d'axe géométrique dirigé vers le haut. De cette sorte, il est aisément possible, en pivotant les tôles à andains (29) autour de leur charnière (30), d'ajuster la largeur de l'andain et dans une moindre mesure, sa position transversale par rapport au mécanisme de récolte (4). Le maintien de chaque tôle à andains (29) dans la position choisie est réalisé par l'intermédiaire d'une poignée de verrouillage (31) qui permet à l'utilisateur de lier rigidement, mais de manière amovible, la tôle à andains (29) au capot (28).

L'entraînement en rotation du rotor de traitement (15) et des disques (17) de la barre de coupe (13) s'effectue à partir du tracteur (2) auquel est attelée la faucheuse (1). En effet, c'est la prise de force (non représentée) du tracteur (2) qui entraîne, par l'intermédiaire d'organes d'entraînement (32), le rotor de traitement (15), lequel rotor de traitement (15) transmet, par l'intermédiaire d'organes de transmission (33), le mouvement de rotation aux disques (17) de la barre de coupe (13). Pour communiquer le mouvement de rotation de la prise de force du tracteur (2) au rotor de traitement (15), il est prévu un premier arbre télescopique à joints universels (34) s'étendant au moins sensiblement dans la direction de travail (10), qui est accouplé à un carter de renvoi (35) fixé à la poutre-support (6) et lui-même accouplé à un deuxième arbre télescopique à joints universels (36) s'étendant transversalement à la direction de travail (10).

Le premier arbre télescopique à joints universels (34) entraîne, à partir de la prise de force, l'arbre d'entrée (37) du carter de renvoi (35) qui s'étend juste sous la première liaison pivot (11) liant la poutre-support (6) à la structure d'attelage (5). A l'intérieur du carter de renvoi (35) engrène un couple de pignons coniques (38) dont l'un est solidaire de l'arbre d'entrée (37) et l'autre de l'arbre de sortie (39). Ce dernier s'étend en vue de dessus au moins sensiblement dans le prolongement du rotor de traitement (15) et au moins sensiblement parallèlement à l'axe longitudinal de la poutre-support (6). Le deuxième arbre télescopique à joints universels (36), quant à lui, communique le mouvement de rotation de l'arbre de sortie (39) du carter de renvoi (35) au rotor de traitement (15) dont l'extrémité longitudinale intérieure (23) traverse, à cet effet, la paroi latérale intérieure (21) de la structure porteuse (14). Dans cette réalisation particulièrement intéressante, le centre (40) du croisillon du deuxième arbre télescopique à joints universels (36), qui se trouve en regard du rotor de traitement (15), est implanté au moins sensiblement dans le voisinage de l'axe géométrique (12A) de la deuxième liaison pivot (12). Avec une telle disposition, il n'est pas nécessaire de retirer le deuxième arbre télescopique à joints universels (36) si l'on désire amener le mécanisme de récolte (4) dans une position relevée de transport (non représentée) par pivotement autour de l'axe géométrique (12A) de la deuxième liaison pivot (12).

La transmission du mouvement de rotation du rotor de traitement (15) aux disques (17) de la barre de coupe (13) est réalisée, comme dit précédemment, par des organes de transmission (33).

Comme visible sur les figures 1 à 3, ceux-ci comportent principalement : une paire de poulies (41, 42) sur lesquelles s'enroulent des courroies (43), un carter de renvoi (44) fixé au moins sensiblement à l'extrémité longitudinale extérieure de la structure porteuse (14), et un arbre télescopique à joints universels (45).

L'une (41) de ces poulies (41, 42) est montée sur l'extrémité longitudinale (24) du rotor de traitement (15), qui traverse, à cet effet, la paroi latérale extérieure (22) de la structure porteuse (14), et l'autre poulie (42) est montée sur l'arbre d'entrée (46) du carter de renvoi (44). Les courroies (43) qui s'enroulent sur ces poulies (41, 42) et qui sont disposées dans des plans géométriques au moins sensiblement orthogonaux à l'axe de rotation (15A) du rotor de traitement (15), ne s'étendent pas au-delà d'un plan vertical (47) dirigé suivant la direction de travail (10) et contenant l'extrémité extérieure de la zone de coupe.

Le réglage de la tension des courroies (43) est réalisé au moyen d'un dispositif de réglage (48) représenté uniquement sur la figure 3. Le dispositif de réglage (48) comporte un levier (49) qui est articulé, dans sa partie médiane, à la paroi latérale extérieure (22) de la structure porteuse (14) au moyen d'une liaison pivot (50) d'axe géométrique au moins sensiblement parallèle à l'axe de rotation (15A) du rotor de traitement (15). Ce levier (49) est également muni, à l'une de ses deux extrémités longitudinales, d'une poulie (51) entraînée en rotation par les courroies (43) qu'elle tend sous l'action d'un ressort de compression (52) agissant indirectement sur l'autre extrémité longitudinale du levier (49). En effet, une vis (53), sur laquelle sont montés successivement le ressort de compression (52) et une rondelle (54) à face sphérique, s'étend au travers d'un trou (55) de la partie supérieure de la structure porteuse (14) pour être vissée dans un axe pivotant (56) articulé à l'extrémité longitudinale correspondante du levier (49). Compte tenu du fait que le ressort de compression (52) est disposé entre la tête de la vis (53) et (a rondelle (54) dont la face sphérique s'appuie sur la structure porteuse (14), il est possible, en vissant ladite vis (53) dans l'axe pivotant (56) du levier (49), de tendre les courroies (43), proportionnellement à l'effort de compression du ressort de compression (52), au moyen de la poulie (51). En vissant plus ou moins profondément la vis (53) dans l'axe pivotant (56), l'utilisateur peut donc ajuster aisément la tension des courroies (43). Du reste, un capot de protection (57) (représenté en traits mixtes sur les figures 1 et 2), entoure partiellement les poulies (41, 42, 51) et les courroies (43).

Le mouvement de rotation est ainsi transmis en toute sécurité du rotor de traitement (15) à l'arbre d'entrée (46) du carter de renvoi (44).

Le carter de renvoi (44) est fixé plus précisément à la partie supérieure de la structure porteuse (14) et à la verticale du disque extérieur (17'), c'est-à-dire le disque (17) le plus éloigné de la poutre-support (6). A l'intérieur de ce carter de renvoi (44) engrène un couple d'engrenages coniques (58) dont l'un est solidaire de l'arbre d'entrée (46) et l'autre de l'arbre de sortie (59). Ce dernier s'étend vers le bas et son axe de rotation est au moins sensiblement confondu avec l'axe géométrique autour duquel tourne le disque extérieur (17').

La transmission du mouvement de l'arbre de sortie (59) du carter de renvoi (44) au disque extérieur (17') est assurée par l'arbre télescopique à joints universels (45). A cet effet, cet arbre télescopique à joints universels (45) comporte, à chacune de ses extrémités longitudinales, un flasque (60) dont l'un est fixé à un flasque correspondant (61) de l'arbre de sortie (59) au moyen de vis (62), et dont l'autre est lié rigidement au disque extérieur (17') à l'aide de vis (63). Par ailleurs, on peut remarquer sur la figure 3 que la moitié au moins de l'arbre télescopique à joints universels (45) s'étend à l'intérieur du tambour (19) qui surmonte le disque extérieur (17'). De plus, à sa partie supérieure, ce tambour (19) comporte un organe cylindrique (64) centré sur l'axe géométrique dudit tambour (19) et s'étendant, en partie, à l'intérieur d'un organe de protection (65) également cylindrique, mais fixé de manière amovible au carter de renvoi (44). Un tel agencement est destiné à empêcher l'entrée, dans le tambour (19), de poussières et de produits coupés lors de la rotation du disque extérieur (17').

Le mouvement de rotation du disque extérieur (17') est transmis aux autres disques (17) de la barre de coupe (13) au moyen d'engrenages (non représentés) qui sont disposés, d'une manière connue de l'homme de l'art, à l'intérieur du carter (66), de forme longitudinale, de la barre de coupe (13).

Les organes d'entraînement (32) et les organes de transmission (33) de cette faucheuse (1) selon l'invention présentent plusieurs avantages.

En effet, compte tenu du fait que l'entraînement de la barre de coupe (13) est réalisé par l'intermédiaire du rotor de traitement (15), deux arbres télescopiques à joints universels (34, 36) et un carter de renvoi (35) suffisent pour amener le mouvement de rotation du tracteur (2) jusqu'audit rotor de traitement (15) du mécanisme de récolte (4).

En sus, cet entraînement du rotor de traitement (15) par un arbre télescopique à joints universels (36) permet à la deuxième liaison pivot (12) de s'étendre près du sol, ce qui réduit le couple, dû au frottement, s'appliquant au travail sur cette deuxième liaison pivot (12).

Par ailleurs, ces organes d'entraînement (32) sont peu encombrants et permettent de transmettre des efforts importants en toute sécurité.

Comme la barre de coupe (13) s'étend dans le voisinage du rotor de traitement (15), il est relativement aisé de lui transmettre le mouvement.

Les organes de transmission (33), quant à eux, transmettent le mouvement du rotor de traitement (15) directement à l'un (17') des disques (17) de la barre de coupe (13). Il n'est donc plus nécessaire d'équiper la barre de coupe (13) d'un carter latéral.

Etant donné que les organes de transmission (33) s'étendent au moins sensiblement dans le voisinage de l'extrémité longitudinale extérieure (24) du rotor de traitement (15), on réalise une meilleure répartition des masses entre les extrémités longitudinales du mécanisme de récolte (4).

Mais, un tel agencement facilite surtout l'adjonction des éléments de châssis du type limiteur, ressort(s) d'allègement, vérin de relevage, etc.

Comme le montrent les figures 1 et 2, cette faucheuse (1) est notamment équipée d'un organe de délestage (67). Celui-ci est lié, à l'une de ses extrémités longitudinales, à la paroi latérale intérieure (21) de la structure porteuse (14) du mécanisme de récolte (4) au moyen d'une bielle (68) et, à l'autre de ses extrémités longitudinales, à la structure d'attelage (5) à l'aide d'une articulation (69) (figure 1) présentant un axe géométrique au moins sensiblement parallèle à l'axe géométrique (11A) de la première liaison pivot (11).

L'action de l'organe de délestage (67) peut aussi être annulée, en vue de la dépose, au moyen d'un dispositif de commande (70). Ce dernier est connu de l'homme de l'art et peut être commandé en même temps qu'une béquille (71) qui est destinée à supporter le châssis (3) lors de la dépose.

Un organe de verrouillage (72), comprenant un limiteur (73) et un verrou (74), équipe également cette faucheuse (1). D'une manière connue de l'homme de l'art, le limiteur (73) limite, au travail et lorsque la faucheuse (1) est déposée, le pivotement relatif de la poutre-support (6) par rapport à la structure d'attelage (5) autour de l'axe géométrique (11A) de la première liaison pivot (11). En vue du transport, le limiteur (73) peut être verrouillé au moyen du verrou (74), ce qui a pour effet de supprimer ledit pivotement.

En sus, un organe de manoeuvre (75) est prévu pour amener le mécanisme de récolte (4) dans une position relevée de transport (non représentée) par pivotement autour de l'axe géométrique (12A) de la deuxième liaison pivot (12). Cet organe de manoeuvre (75) est, dans cet exemple de réalisation, un vérin (76) qui est lié, à l'une de ses extrémités longitudinales, à la paroi latérale intérieure (21) du mécanisme de récolte (4) au moyen d'un levier pivotant (77) et, à l'autre de ses extrémités longitudinales, à la structure d'attelage (5) à l'aide d'une articulation (78) présentant un axe géométrique au moins sensiblement parallèle à l'axe géométrique (11A) de la première liaison pivot (11). En sus, lorsque le mécanisme de récolte (4) est dans sa position relevée de transport, un loquet (79) le maintient au transport. Tous ces éléments de châssis sont connus de l'homme de l'art et ne seront, de ce fait, pas décrits plus en détail.

Cette faucheuse (1) selon l'invention présente aussi plusieurs avantages au transport. En effet, compte tenu du fait que la deuxième liaison pivot (12) est agencée au moins sensiblement au niveau de l'extrémité inférieure de la paroi intérieure (21) de la structure porteuse (14) (figure 1), le relevage du mécanisme de récolte (4), par pivotement autour de l'axe géométrique (12A) de la deuxième liaison pivot (12), suffit pour placer de manière satisfaisante le mécanisme de récolte (4) dans le prolongement du tracteur (2).

En sus, lorsque le mécanisme de récolte (4) est dans sa position relevée de transport, la paroi latérale intérieure (21) s'étend juste au-dessus de la deuxième liaison pivot (12) et dans le proche voisinage de l'organe de délestage (67), de l'organe de verrouillage (72), de l'organe de manoeuvre (75) et du loquet (79). Il est donc intéressant que les organes de transmission (33) s'étendent à l'extrémité extérieure du mécanisme de récolte (4), là où il y a plus de place disponible.

En outre, vue suivant le sens d'avance au travail (10), la poutre-support (6) présente, dans le voisinage de la deuxième liaison pivot (12), un coude (80) situé plus bas que l'axe géométrique (12A) de ladite deuxième liaison pivot (12). Ce coude (80) présente, lorsque le mécanisme de récolte (4) est en position relevée de transport, un double avantage. En effet, il permet d'une part un gain de place entre la poutre-support (6) et la paroi latérale intérieure (21), où peut par exemple être logée une extrémité longitudinale de l'organe de délestage (67) et la bielle (68), et il permet d'autre part à la poutre-support (6) de mieux supporter l'action du poids du mécanisme de récolte (4) dont le centre des masses s'étend au moins sensiblement à la verticale du coude (80).

Du reste, cette faucheuse (1) comporte encore un dispositif de sécurité (81) s'opposant à un relevage accidentel du mécanisme de récolte (4). Ce dispositif de sécurité (81) est destiné à éviter que l'utilisateur ne relève le mécanisme de récolte (4) durant le travail, ce qui endommagerait irrémédiablement le deuxième arbre télescopique à joints universels (36) entraînant le rotor de traitement (15). Ce dispositif de sécurité (81) se compose d'une butée (82) fixée à la poutre-support (6) dans le voisinage de la deuxième liaison pivot (12), et d'un organe de retenue (83) lié à la paroi latérale intérieure (21) du mécanisme de récolte (4) au moyen d'une articulation cylindrique (84) d'axe géométrique au moins sensiblement parallèle à l'axe géométrique (12A) de la deuxième liaison pivot (12). De cette manière, l'organe de retenue (83) peut occuper deux positions par pivotement autour de l'axe géométrique de son articulation cylindrique (84): une première position (figures 1 et 2) dans laquelle il limite le pivotement, vers le haut, du mécanisme de récolte (4) par rapport au châssis (3) et une deuxième position (non représentée) dans laquelle il autorise le pivotement du mécanisme de récolte (4) jusque dans sa position relevée de transport. En d'autres termes, lorsque l'organe de retenue (83) est dans sa première position et que le mécanisme de récolte (4) commence à pivoter vers le haut sous l'action de l'organe de manoeuvre (75) , ledit organe de retenue (83) est plaqué contre la butée (82) de la poutre-support (6), ce qui empêche l'organe de manoeuvre (75) de relever davantage le mécanisme de récolte (4). On ne risque donc pas d'endommager accidentellement le deuxième arbre télescopique à joints universels (36) pendant qu'il entraîne le rotor de traitement (15).

Le passage de l'organe de retenue (83) de sa première position dans sa deuxième position s'effectue par l'intermédiaire d'une commande à distance (85) sur laquelle agit l'utilisateur depuis le tracteur (2). En maintenant l'organe de retenue (83) dans sa deuxième position, l'utilisateur peut alors relever le mécanisme de récolte (4) dans sa position de transport. Il va de soi que l'utilisateur aura pris soin, dans ce cas, d'arrêter la rotation de la prise de force avant de relever le mécanisme de récolte (4).

On comprendra encore que diverses modifications peuvent être apportées à l'exemple de réalisation décrit sans sortir, pour autant, du domaine de protection tel que défini dans les revendications.

## Revendications

1. Faucheuse (1) comportant :
- un mécanisme de récolte (4) s'étendant, au travail, transversalement à la direction de travail (10), qui comprend d'une part une barre de coupe (13) à disques (17) tournant chacun, lors du travail, autour d'un axe géométrique respectif dirigé vers le haut et muni d'outils de coupe (18), quelques uns au moins desdits disques (17) étant entraînés en rotation par des moyens de transmission situés sous lesdits disques (17), et d'autre part un rotor (15) de traitement du produit coupé par les outils de coupe (18) ;
- une structure d'attelage (5) destinée à être liée à un véhicule moteur (2) ;
- une poutre-support (6) articulée d'une part à la structure d'attelage (5) au moyen d'une première liaison pivot (11) d'axe géométrique (11A) dirigé vers l'avant et d'autre part au mécanisme de récolte (4) au moyen d'une deuxième liaison pivot (12) d'axe géométrique (12A) également dirigé vers l'avant ;
et
- des organes d'entraînement (32) destinés à entraîner le rotor de traitement (15) par son extrémité longitudinale intérieure (23) située du côté de la structure d'attelage (5) ;
caractérisée en ce que le mécanisme de récolte (4) est muni d'organes de transmission (33) s'étendant à l'extrémité longitudinale extérieure (24) du rotor de traitement (15), éloignée de la structure d'attelage (5) et destinés à transmettre le mouvement du rotor de traitement (15) aux disques (17) de la barre de coupe (13), lesdits organes de transmission (33) comprenant deux poulies (41, 42) sur lesquelles s'enroule au moins une courroie (43).

2. Faucheuse selon la revendication 1, caractérisée en ce que les organes de transmission (33) ne s'étendent pas au-delà d'un plan vertical (47) dirigé suivant la direction de travail (10) et contenant l'extrémité extérieure de la zone de coupe.

3. Faucheuse selon la revendication 1 ou 2, caractérisée en ce que les organes de transmission (33) transmettent le mouvement, par le dessus, à l'un des disques (17) situé à l'extrémité longitudinale extérieure de la barre de coupe (13), et que ce mouvement est communiqué aux autres disques (17) par l'intermédiaire desdits moyens de transmission.

4. Faucheuse selon la revendication 3, caractérisée en ce que chaque disque (17) s'étendant à une extrémité longitudinale respective de la barre de coupe (13) est surmonté d'un tambour (19) correspondant, fermé ou ajouré, destiné à calibrer le flux de produit coupé par les outils de coupe (18).

5. Faucheuse selon la revendication 3 ou 4, caractérisée en ce que le mécanisme de récolte (4) comprend en sus une structure porteuse (14) surmontant la barre de coupe (13), et que les organes de transmission (33) comportent un carter de renvoi (44) fixé à ladite structure porteuse (14).

6. Faucheuse selon la revendication 5, caractérisée en ce que la structure porteuse (14) est liée à la barre de coupe (13) au moyen de deux parois latérales (21, 22) s'étendant chacune vers le bas, de sorte que son extrémité inférieure soit située derrière un disque (17) situé à l'extrémité longitudinale correspondante de la barre de coupe (13).

7. Faucheuse selon la revendication 5 ou 6, caractérisée en ce que l'une (41) desdites poulies (41, 42) est directement fixée sur l'extrémité longitudinale extérieure (24) du rotor de traitement (15) et que l'autre poulie (42) est directement fixée sur l'arbre d'entrée (46) du carter de renvoi (44), un arbre télescopique à joints universels (45) liant en rotation l'arbre de sortie (59) dudit carter de renvoi (44) avec l'un (17') des disques (17) de la barre de coupe (13).

8. Faucheuse selon l'une au moins des revendications 1 à 7, caractérisée en ce que le réglage de la tension de la (des) courroie(s) (43) s'effectue au moyen d'un dispositif de réglage (48).

9. Faucheuse selon la revendication 8 et l'une au moins des revendications 5 à 7, caractérisée en ce que le dispositif de réglage (48) comporte :
- un levier (49) articulé dans sa partie médiane à la structure porteuse (14) au moyen d'une liaison pivot (50) d'axe géométrique au moins sensiblement parallèle à l'axe de rotation (15A) du rotor de traitement (15),
- une poulie (51) guidée en rotation à l'une des deux extrémités longitudinales du levier (49), et
- un ressort (52) agissant, de manière réglable, sur l'autre extrémité longitudinale du levier (49) de sorte à tendre la (les) courroie(s) (43) via ladite poulie (51).

10. Faucheuse selon l'une au moins des revendications 1 à 9, caractérisée en ce que les organes d'entraînement (32) servant à entraîner le rotor de traitement (15) comportent un carter de renvoi (35).

11. Faucheuse selon la revendication 10, caractérisée en ce que le carter de renvoi (35) est fixé à la poutre-support (6) dans le voisinage de la première liaison pivot (11).

12. Faucheuse selon la revendication 10 ou 11, caractérisée en ce que les organes d'entraînement (32) comportent en sus un arbre télescopique à joints universels (36) s'étendant transversalement à la direction de travail (10) et transmettant le mouvement de rotation de l'arbre de sortie (39) dudit carter de renvoi (35) au rotor de traitement (15).

13. Faucheuse selon la revendication 12, caractérisée en ce que le centre (40) du joint universel dudit arbre télescopique à joints universels (36) se trouvant en regard du rotor de traitement (15) est situé dans le voisinage de l'axe géométrique (12A) de la deuxième liaison pivot (12).

14. Faucheuse selon l'une au moins des revendications 1 à 13, caractérisée en ce que le mécanisme de récolte (4) peut être amené dans une position relevée de transport par pivotement autour de l'axe géométrique (12A) de la deuxième liaison pivot (12) au moyen d'un organe de manoeuvre (75).

15. Faucheuse selon la revendication 14, caractérisée en ce que l'organe de manoeuvre (75) est un vérin (76) lié, à l'une de ses extrémités longitudinales, à la paroi latérale intérieure (21) du mécanisme de récolte (4) au moyen d'un levier pivotant (77) et, à l'autre de ses extrémités longitudinales, à la structure d'attelage (5) à l'aide d'une articulation (78) présentant un axe géométrique au moins sensiblement parallèle à l'axe géométrique (11A) de la première liaison pivot (11).

16. Faucheuse selon la revendication 14 ou 15, caractérisée en ce que, vue suivant la direction d'avance au travail (10), la poutre-support (6) présente, dans le voisinage de la deuxième liaison pivot (12), un coude (80) situé plus bas que l'axe géométrique (12A) de ladite deuxième liaison pivot (12).

17. Faucheuse selon l'une au moins des revendications 1 à 16, caractérisée en ce que le mécanisme de récolte (4) est délesté au moyen d'un organe de délestage (67).

18. Faucheuse selon la revendication 17, caractérisée en ce que l'organe de délestage (67) est lié, à l'une de ses extrémités longitudinales, à la paroi latérale intérieure (21) du mécanisme de récolte (4) au moyen d'une bielle (68) et, à l'autre de ses extrémités longitudinales, à la structure d'attelage (5) à l'aide d'une articulation (69) présentant un axe géométrique au moins sensiblement parallèle à l'axe géométrique (11A) de la première liaison pivot (11).

## Claims

1. A mower (1) comprising:
- a harvesting mechanism (4) extending, during work, crosswise to the direction of work (10) and comprising on one hand a cutter bar (13) with discs (17) each rotating, during work, around an upwardly directed respective geometrical axis and provided with cutting tools (18), some at least of the said discs (17) being driven in rotation by transmission means located under the said discs (17), and on the other had a rotor (15) for the treatment of the product cut by the cutting tools (18);
- a hitching structure (5) intended to be connected to a motor vehicle (2);
- a support beam (6) articulated on one hand to the hitching structure (5) by means of a first pivot connection (11) with a geometrical axis (11A) directed forwards and on the other had to the harvesting mechanism (4) by means of a second pivot connection (12) with a geometrical axis (12A) which is also directed forwards;
and
- driving elements (32) intended to drive the treatment rotor (15) from its inner longitudinal end (23) located on the side of the hitching structure (5);
***characterised in*** that the harvesting mechanism (4) is provided with transmission elements (33) extending at the outer longitudinal end (24) of the treatment rotor (15), remote from the hitching structure (5) and intended to transmit the movement from the treatment rotor (15) to the discs (17) of the cutter bar (13), the said transmission elements (33) comprising two pulleys (41, 42) on which winds at least one belt (43).

2. A mower in accordance with claim 1, ***characterised in*** that the transmission elements (33) do not extend beyond a vertical plane (47) directed according to the direction of work (10) and containing the outer end of the cutting area.

3. A mower in accordance with claim 1 or 2, ***characterised in*** that the transmission elements (33) transmit the movement, from above, to one of the discs (17) located at the outer longitudinal end of the cutter bar (13), and that this movement is communicated to the other discs (17) by the said transmission means.

4. A mower in accordance with claim 3, ***characterised in*** that each disc (17) extending at a respective longitudinal end of the cutter bar (13) is surmounted by a corresponding closed or opened drum (19), which is intended to calibrate the flow of the product cut by the cutting tools (18).

5. A mower in accordance with claim 3 or 4, ***characterised in*** that the harvesting mechanism (4) additionally comprises a carrier structure (14) surmounting the cutter bar (13), and that the transmission elements (33) comprise an angled gear box (44) fastened to the said carrier structure (14).

6. A mower in accordance with claim 5, ***characterised in*** that the carrier structure (14) is connected to the cutter bar (13) by means of two lateral walls (21, 22) each extending downwards, so that its lower end is located behind a disc (17) located at the corresponding longitudinal end of the cutter bar (13).

7. A mower in accordance with claim 5 or 6, ***characterised in*** that one (41) of the said pulleys (41, 42) is fastened directly to the outer longitudinal end (24) of the treatment rotor (15) and that the other pulley (42) is fastened directly to the input shaft (46) of the angled gear box (44), a telescopic shaft (45) with universal joints connecting in rotation the output shaft (59) of the said angled gear box (44) with one (17') of the discs (17) of the cutter bar (13).

8. A mower in accordance with one at least of claims 1 to 7, ***characterised in*** that the adjustment of the tension of the belt(s) (43) is achieved by means of an adjustment device (48).

9. A mower in accordance with claim 8 and with one at least of claims 5 to 7, ***characterised in*** that the adjustment device (48) comprises:
- a lever (49) articulated in its median part to the carrier structure (14) by means of a pivot connection (50) with a geometrical axis at least approximately parallel to the axis of rotation (15A) of the treatment rotor (15),
- a pulley (51) guided in rotation at one of the two longitudinal ends of the lever (49), and
- a spring (52) acting, in an adjustable manner, on the other longitudinal end of the lever (49) so as to tense the belt(s) (43) via the said pulley (51).

10. A mower in accordance with one at least of claims 1 to 9, ***characterised in*** that the driving elements (32) which drive the treatment rotor (15) comprise an angled gear box (35).

11. A mower in accordance with claim 10, ***characterised in*** that the angled gear box (35) is fastened to the support beam (6) in the vicinity of the first pivot connection (11).

12. A mower in accordance with claim 10 or 11, ***characterised in*** that the driving elements (32) additionally comprise a telescopic shaft (36) with universal joints extending crosswise to the direction of work (10) and transmitting the rotary movement from the output shaft (39) of the said angled gear box (35) to the treatment rotor (15).

13. A mower in accordance with claim 12, ***characterised in*** that the center (40) of the universal joint of the said telescopic shaft (36) with universal joints which is located opposite to the treatment rotor (15) is located in the vicinity of the geometrical axis (12A) of the second pivot connection (12).

14. A mower in accordance with one at least of claims 1 to 13, ***characterised in*** that the harvesting mechanism (4) can be brought in a lifted transport position by swivelling about the geometrical axis (12A) of the second pivot connection (12) by means of an operating element (75).

15. A mower in accordance with claim 14, ***characterised in*** that the operating element (75) is a jack (76) connected, at one of its longitudinal ends, to the inner lateral wall (21) of the harvesting mechanism (4) by means of a pivoting lever (77) and, at the other of its longitudinal ends, to the hitching structure (5) by means of an articulation (78) with a geometrical axis at least approximately parallel to the geometrical axis (11A) of the first pivot connection (11).

16. A mower in accordance with claim 14 or 15, ***characterised in*** that, seen in the direction of work (10), the support beam (6) has, in the vicinity of the second pivot connection (12), a crank (80) located lower than the geometrical axis (12A) of the said second pivot connection (12).

17. A mower in accordance with one at least of claims 1 to 16, ***characterised in*** that the harvesting mechanism (4) is lightened by means of a lightening element (67).

18. A mower in accordance with claim 17, ***characterised in*** that the lightening element (67) is connected, at one of its longitudinal ends, to the inner lateral wall (21) of the harvesting mechanism (4) by means of a rod (68) and, at the other of its longitudinal ends, to the hitching structure (5) by means of an articulation (69) with a geometrical axis at least approximately parallel to the geometrical axis (11A) of the first pivot connection (11).

## Patentansprüche

1. Mähmaschine (1), die
- einen Erntemechanismus (4), der sich während der Arbeit quer zur Arbeitsrichtung (10) erstreckt, und der einerseits einen Mähbalken (13) mit Scheiben (17), die während der Arbeit um eine entsprechende, nach oben gerichtete geometrische Achse rotieren und mit Schneidwerkzeugen (18) versehen sind, wobei zumindest einige dieser Scheiben (17) mittels sich unter den Scheiben (17) befindlichen Übertragungsmitteln drehbar angetrieben werden, und andererseits einen Rotor (15) zur Behandlung des von den Schneidwerkzeugen (18) geschnittenen Gutes aufweist;
- eine Kupplungsvorrichtung (5) zur Kupplung an ein Motorfahrzeug (2);
- einen Tragbalken (6), der einerseits mit der Kupplungsvorrichtung (5) mittels einer ersten Gelenkzapfenverbindung (11) mit nach vorne gerichteten geometrischen Achse (11A) und andererseits mit dem Erntemechanismus (4) mittels einer zweiten Gelenkzapfenverbindung (12) mit einer ebenfalls nach vorne gerichteten geometrischen Achse (12A) gelenkig verbunden ist;
und
- Antriebselemente (32), die zum Antrieb des inneren, sich auf der Seite der Kupplungsvorrichtung (5) befindenden Längsendes (23) des Behandlungsrotors (15) bestimmt sind;
aufweist,
***dadurch gekennzeichnet*****,** daß der Erntemechanismus (4) mit Übertragungselemente (33) versehen ist, die sich am äußeren, von der Kupplungsvorrichtung (5) entfernten Längsende (24) des Behandlungsrotors (15) erstrecken und die zur Übermittlung der Drehbewegung des Behandlungsrotors (15) zu den Scheiben (17) des Mähbalkens (13) vorgesehen sind, wobei diese Übertragungselemente (33) aus zwei Riemenscheiben (41, 42) auf welchen zumindest einen Riemen (43) montiert ist, bestehen.

2. Mähmaschine nach Anspruch 1, ***dadurch gekennzeichnet,*** daß die Übertragungselemente (33) sich nicht jenseits einer in Arbeitsrichtung (10) zeigenden und das äußere Ende des Mähbereichs enthaltenden vertikalen Ebene (47), erstrecken.

3. Mähmaschine nach Anspruch 1 oder 2, ***dadurch gekennzeichnet,*** daß die Übertragungselemente (33) die Drehbewegung, von oben, auf eine der Scheiben (17), die sich an dem äußeren Längsende des Mähbalkens (13) erstreckt, übertragen, und daß diese Drehbewegung auf die anderen Scheiben (17) mittels der Übertragungsmitteln übertragen wird.

4. Mähmaschine nach Anspruch 3, ***dadurch gekennzeichnet,*** daß jede, sich an einem entsprechenden Längsende des Mähbalkens (13) erstreckende Scheibe (17) von einer geschloßenen oder geöffneten Trommel (19) übergelagert ist, die zum Kalibrieren des Stroms des von den Mähwerkzeugen (18) geschnittenen Gutes vorgesehen ist.

5. Mähmaschine nach Anspruch 3 oder 4, ***dadurch gekennzeichnet,*** daß der Erntemechanismus (4) ferner mit einem Traggestell (14) versehen ist, welches den Mähbalken (13) überlagert, und daß die Übertragungselemente (33) ein Winkelgetriebe (44) aufweisen, das an dem Traggestell (14) befestigt ist.

6. Mähmaschine nach Anspruch 5, ***dadurch gekennzeichnet,*** daß das Traggestell (14) mit dem Mähbalken (13) mittels zweier Seitenwände (21, 22) verbunden ist, die sich jeweils derart nach unten erstrecken, daß sich ihr unteres Ende hinter einer sich an dem entsprechenden Längsende des Mähbalkens (13) befindenden Scheibe (17) erstreckt.

7. Mähmaschine nach Anspruch 5 oder 6, ***dadurch gekennzeichnet,*** daß eine (41) der Riemenscheiben (41, 42) direkt mit dem äußeren Längsende (24) des Behandlungsrotors (15) und die andere Riemenscheibe (42) direkt mit der Eingangswelle (46) des Winkelgetriebes (44) befestigt sind, wobei eine Teleskopwelle (45) mit Kardangelenken die Ausgangswelle (59) des Winkelgetriebes (44) mit einer (17') der Scheiben (17) des Mähbalkens (13) verbindet.

8. Mähmaschine nach zumindest einem der Ansprüche 1 bis 7, ***dadurch gekennzeichnet,*** daß die Spannung des Riemens (der Riemen) (43) mittels einer Einstellvorrichtung (48) eingestellt wird.

9. Mähmaschine nach Anspruch 8 und zumindest einem der Ansprüche 5 bis 7, ***dadurch gekennzeichnet,*** daß die Einstellvorrichtung:
- einen Hebel (49), der in seinem Mittelbereich mittels einer Gelenkzapfenverbindung (50), deren geometrischen Achse zumindest im wesentlichen parallel zur geometrischen Achse (15A) des Behandlungsrotors (15) ist, an dem Traggestell (14) angelenkt ist,
- eine Scheibe (51), die an einem der beiden Längsende des Hebels (49) drehbar geführt ist, und
- eine Feder (52), die in einstellbarer Weise derart auf das andere Längsende des Hebels (49) wirkt, daß der (die) Riemen (43) über die Scheibe (41) gespannt wird (werden),
aufweist.

10. Mähmaschine nach zumindest einem der Ansprüche 1 bis 9, ***dadurch gekennzeichnet,*** daß die Antriebselemente (32), die zum Antrieb des Behandlungsrotors (15) dienen, ein Winkelgetriebe (35) aufweisen.

11. Mähmaschine nach Anspruch 10, ***dadurch gekennzeichnet,*** daß das Winkelgetriebe (35) an dem Tragbalken (6), in der Nähe der ersten Gelenkzapfenverbindung (11), befestigt ist.

12. Mähmaschine nach Anspruch 10 oder 11, ***dadurch gekennzeichnet,*** daß die Antriebselemente (32) ferner eine Teleskopwelle (36) mit Kardangelenken aufweisen, die sich quer zur Arbeitsrichtung (10) erstreckt und die die Drehbewegung der Ausgangswelle (39) des Winkelgetriebes (35) dem Behandlungsrotor (15) überträgt.

13. Mähmaschine nach Anspruch 12, ***dadurch gekennzeichnet,*** daß der Mittelpunkt (40) des auf der Seite des Behandlungsrotors (15) liegenden Kardangelenks der Teleskopwelle (36) mit Kardangelenken sich in der Nähe der geometrischen Achse (12A) der zweiten Gelenkzapfenverbindung (12) befindet.

14. Mähmaschine nach zumindest einem der Ansprüche 1 bis 13, ***dadurch gekennzeichnet,*** daß der Erntemechanismus (4) durch Schwenken um die geometrische Achse (12A) der zweiten Gelenkzapfenverbindung (12) mittels eines Betätigungselementes (75) in eine obere Transportstellung gebracht werden kann.

15. Mähmaschine nach Anspruch 14, ***dadurch gekennzeichnet,*** daß das Betätigungselement (75) ein Zylinder (76) ist, der an einem seiner Längsenden mit der inneren Seitenwand (21) des Erntemechanismus (4) mittels eines Schwenkhebels (77) und an dem anderen seiner Längsenden mit der Kupplungsvorrichtung (5) mittels eines Gelenks (78) verbunden ist, welches eine zumindest im wesentlichen zur geometrischen Achse (11A) der ersten Gelenkzapfenverbindung (11) parallele geometrische Achse aufweist.

16. Mähmaschine nach Anspruch 14 oder 15, ***dadurch gekennzeichnet,*** daß der Tragbalken (6), in Arbeitsrichtung (10) gesehen, in dem Bereich der zweiten Gelenkzapfenverbindung (12) einen Knick (80) aufweist, der niedriger als die geometrische Achse (12A) der zweiten Gelenkzapfenverbindung (12) liegt.

17. Mähmaschine nach zumindest einem der Ansprüche 1 bis 16, ***dadurch gekennzeichnet,*** daß der Erntemechanismus (4) mittels eines Entlastungselementes (67) entlastet ist.

18. Mähmaschine nach Anspruch 17, ***dadurch gekennzeichnet,*** daß das Entlastungselement (67) an einem seiner Längsenden mit der inneren Seitenwand (21) des Erntemechanismus (4) mittels einer Stange (68) und an dem anderen seiner Längsenden mit der Kupplungsvorrichtung (5) mittels eines Gelenks (69) verbunden ist, welche eine zumindest im wesentlichen zur geometrischen Achse (11A) der ersten Gelenkzapfenverbindung (11) parallele geometrische Achse aufweist.
